# EUROPÄISCHE PATENTANMELDUNG

(11) **EP 3 427 689 A1**
(43) Veröffentlichungstag der Anmeldung: **16.01.2019**
(21) Anmeldenummer: 18175631.3
(22) Anmeldetag: 01.06.2018
(51) Int. Cl.: A61C 7/30

(54) **ANORDNUNG MIT EINEM BRACKET UND EINEM CLIP**

(30) Priorität: 11.07.2017 DE 102017211867
(71) Anmelder: DW LINGUAL SYSTEMS GMBH, 49152 Bad Essen (DE)
(72) Erfinder: Wiechmann, Dirk, 49152 Bad Essen (DE)
(74) Vertreter: Taruttis, Stefan Georg

(57) **Zusammenfassung**

Anordnung (1) umfassend ein Bracket (3) mit einem Pad (5) und einem Bracketbody (7) mi einem Slot (9) zur Aufnahme eines kieferorthopädischen Drahtes (11) sowie einen dem Bra cket (3) zugeordneten Clip (13) aus einem Formgedächtnismaterial zum Verschließen und Freigeben des Slots (9) des Brackets (3), um den kieferorthopädischen Draht (11) in einer Schließstellung in dem Slot (9) zu halten bzw. ihn in einer Öffhungsstellung zur Entnahme aus dem Slot (9) frei zu geben, dadurch gekennzeichnet, dass ein erstes Ende des Clips ein Fixierende (15) ist, das fest mit dem Bracket (3) verbunden ist, und ein zweites Ende des Clips ein Freiende (17) ist, das in der Öffnungsstellung an dem Bracket (3) den Slot (9) frei gebend anliegt und in der Schließstellung an dem Bracket (3) den Slot (9) übergreifend an liegt.

## Beschreibung

### Anordnung mit einem Bracket und einem Clip

Die Erfindung betrifft eine Anordnung mit einem Bracket und einem Clip.

Für die kieferorthopädische Behandlung von Patienten mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody mit einem Slot auf, der den Draht aufnimmt.

Um den Draht in dem Slot zu halten, kann ein Clip verwendet werden, der in einer Öffnungsstellung den Draht zur Entnahme aus dem Slot frei gibt und in einer Schließstellung den Draht in dem Slot hält.

### Stand der Technik

Aus der US3772787 ist ein Clip bekannt, der zwischen der Öffnungsstellung und der Schließstellung eine reine Translationsbewegung ausführt. Aus der US5562444 ist ein Clip bekannt, der zwischen der Öffnungsstellung und der Schließstellung eine reine Rotationsbewegung ausführt. Dabei zeigt die US 5,562,444 A ein Bracket mit einem Clip, der mit einem Ende über den Slot geschwenkt werden kann und nicht fest mit dem Bracket verbunden ist. Die US 3,772,787 zeigt ein Bracket, bei dem ein U-förmiger Clip senkrecht zum Slot über den Slot geschoben werden kann und mit einem Arm in eine Ausnehmung gegenüber dem Slot eingreifen kann.

Aus der US5630716 ist ein Clip bekannt, der zwischen der Öffnungsstellung und der Schließstellung eine Translations- und eine Rotationsbewegung ausführt.

Die US 6,992,597 B2 zeigt ein Bracket, bei dem der Slot durch einen schwenkbar am Bracketbody angelenkten Deckel verschlossen werden kann. Der Deckel ist an einer Schwenkachse angelenkt, die parallel zum Slot verläuft. Das gegenüberliegende Ende des Deckels tritt mit dem Bracketbody in Eingriff, um formschlüssig mit dem Bracketbody fest verbunden zu sein und einen Bogendraht im Slot fest zu halten.

Die US 2017/0027666 A1 zeigt einen U-förmigen Clip, der als Ganzes über den Slot bzw. einen darin angeordneten kieferorthopädischen Draht in eine Schließstellung verschieblich ist und dabei mit einem Arm in einem okklusal-gingivalen Schlitz geführt ist. Dabei kann eine Rastnase an dem geführten Arm in einer Endposition der Verschiebung einen Anschlag bilden. Der andere Arm greift in Geschlossenstellung mit seinem Ende in Hinterschneidungen, die am Bracketbody ausgebildet sind, so dass in Geschlossenstellung die Arme des Clips zwischen sich den im Slot angeordneten Bogendraht einfassen.

Die US 6,325,622 B1 beschreibt ein Bracket, bei dem ein Bügel verschieblich in einem okklusal-gingivalen Schlitz geführt ist und über den Slot bewegt werden kann, um einen kieferorthopädischen Draht darin zu halten.

Die US 2014/0199648 A1 zeigt einen plattenförmigen oder U-förmigen Clip, dessen einer Arm über den Slot und kieferorthopädischen Draht geschoben werden kann und dessen gegenüberliegender Arm zwischen Bracket und Pad verschieblich geführt sein kann.

Die US 2006/0228664 A1 zeigt einen U-förmigen Clip, der als Ganzes in Längsführungen zwischen Pad und Bracketbody verschieblich ist und dessen Arm in einer Offenstellung mit der Führung verrasten kann.

Ein Nachteil der bekannten Clips ist, dass sich Zahnstein an den Clips anlagern kann, der sowohl ein Öffnen des Clips zur Freigabe des Slots beeinflussen kann als auch beim Schließen des Clips zwischen dem Bracket und dem Clip verbleiben kann, wodurch ein sauberes Schließen des Clips verhindert ist.

Aus DE 102011003894 A1 ist ein Verfahren zur Herstellung von individuellen Brackets bekannt.

### Aufgabe der Erfindung

Aufgabe der vorliegenden Erfindung ist es daher, eine Anordnung mit einem alternativen Clip bzw. einem alternativem Bracket bereitzustellen, die ein sauberes Öffnen und Schließen des Clips auch nach einer gewissen Verweildauer im Mund eines Patienten erlaubt.

### Beschreibung der Erfindung

Die Aufgabe wird erfindungsgemäß durch eine Anordnung mit einem Bracket und einem Clip mit den Merkmalen der Ansprüche gelöst.

Generell kann das erfindungsgemäße Bracket ein Pad aufweisen, das zur Befestigung an einer Zahnoberfläche vorgesehen ist, und einen mit dem Pad verbundenen Bracketbody, der einen Slot zum Aufnehmen eines kieferorthopädischen Drahts aufweist, mit einem Clip, dessen erstes Ende fest mit dem Bracket, insbesondere mit dem Bracketbody, verbunden ist und dessen vom ersten Ende beabstandetes zweites Ende ein Freiende ist, wobei der Clip aus Formgedächtnismaterial besteht und eingerichtet ist, dass in einer Schließstellung sein zweites Ende den Slot übergreift, um den Querschnitt des Slots zu schließen, und dass in einer Öffnungsstellung sein zweites Ende vom Slot entfernt ist, um den Querschnitt des Slots freizugeben, so dass z.B. ein kieferorthopädischer Draht senkrecht zu seiner Längsachse in den Slot geschoben werden kann. Das erste Ende des Clips bildet ein Fixierende, das ortsfest bzw. nicht verschieblich und bevorzugt ohne Schwenkgelenk am Bracket festgelegt ist. Dabei ist der Clip zwischen der Schließstellung und der Öffnungsstellung durch Biegen beweglich, insbesondere durch Biegen senkrecht zu seiner Längserstreckung.

Von dem Clip, auch bei Ausführung des Clips mit rechteckiger Querschnittsform, ist nur das zweite Ende des Clips relativ zum Bracketbody beweglich, nämlich senkrecht zur Längsachse des Slots bzw. senkrecht zur Längsachse eines Bogendrahts, der in dem Slot anzuordnen ist. Bevorzugt ist der Slot eingerichtet, einen kieferorthopädischen Draht entlang seiner Längsachse in dem Slot verschieblich zu halten. Bevorzugt weist der Slot einen Querschnitt, z.B. rechteckig, auf, von dem ein Abschnitt, z.B. entsprechend seiner lichten Höhe oder Breite, offen ist. Der offene Abschnitt des Slotquerschnitts kann in der Schließstellung vom zweiten Ende des Clips überdeckt werden und dadurch der Slot abschnittsweise an seiner offenen Seite vom Freiende überdeckt werden.

Optional ist der Clip eingerichtet, bei einer Temperatur oberhalb von z.B. 20°C, 25°C oder 35°C die Schließstellung einzunehmen, und besteht aus einem Formgedächtnismaterial.

Generell bevorzugt ist das Freiende des Clips in Schließstellung mit der Federspannung bzw. Rückstellkraft, die der Clip selbst aufweist, nur gegen den Querschnitt des Slots, insbesondere gegen die offene Seite des Slotquerschnitts, bzw. gegen einen im Slot angeordneten kieferorthopädischen Draht angeordnet. Das Freiende steht in Schließstellung nicht in form- und/oder kraftschlüssigem Eingriff mit dem Bracket bzw. Bracketbody.

Die Anordnung des Freiendes des Clips gegen den Querschnitt des Slots bzw. gegen einen im Slot angeordneten kieferorthopädischen Draht führt zu einer Federbelastung des Bogendrahts in den Slot, da das Freiende des Clips nicht am Bracket fixiert und nicht durch Formschluß am Bracket gehalten ist, z.B. nicht in Hinterschneidungen oder Ausnehmungen des Brackets eingreift. Das Freiende kann in einer Ausnehmung des Brackets, insbesondere des Bracketbodys, frei angeordnet sein. Das Freiende kann in Schließstellung in einer Ausnehmung des Brackets angeordnet sein, jedoch ohne Kontakt mit dem Bracket. Die durch das Freiende des Clips auf den Querschnitt des Slots bzw. gegen einen im Slot angeordneten Bogendraht ausgeübte Federbelastung hält den kieferorthopädischen Draht im Slot, wobei geringe Reibungskräfte zwischen dem kieferorthopädischen Draht und dem Freiende bzw. dem Slot erzeugt werden, z.B. sind bevorzugt geringere Reibungskräfte möglich, als sie durch einen Arm eines Clips ausgeübt werden, bei dem beide Enden formschlüssig und/oder kraftschlüssig am Bracket in Schließstellung gehalten sind.

Die Anordnung des Freiendes des Clips in Schließstellung nur gegen den Querschnitt des Slots bzw. gegen einen im Slot angeordneten kieferorthopädischen Draht und nur durch die Federspannung des Clips selbst hat den Vorteil, dass keine Hinterschneidung oder Ausnehmung am Bracket kraft- und/oder formschlüssig mit dem Freiende in Eingriff tritt, so dass die Anordnung des Freiendes in der Schließstellung nicht durch Ablagerungen in einer Hinterschneidung oder Ausnehmung am Bracket gestört wird.

Ein weiterer Vorteil der Anordnung des Freiendes des Clips in Schließstellung nur gegen den Querschnitt des Slots bzw. gegen einen im Slot angeordneten kieferorthopädischen Draht durch die Federspannung bzw. Rückstellkraft des Clips in die Schließstellung liegt darin, dass sich das Freiende ohne weiteres durch seine Federspannung bzw. Rückstellkraft in die Schließstellung anordnet. Dabei ist es nicht erforderlich, dass das Freiende in die Schließstellung bewegt werden müsste, z.B. ist es nicht erforderlich, nach Einsetzen eines kieferorthopädischen Drahts in den Slot das Freiende des Clips mittels eines Werkzeugs in die Schließstellung in eine Ausnehmung oder Hinterschneidung des Brackets einzuführen. Daher erlaubt die erfindungsgemäße Anordnung bzw. das Bracket mit dem an seinem Fixierende festgelegten Clip ein einfaches Öffnen des Slots durch Bewegen des Freiendes in seine Öffnungsstellung, z.B. mittels eines Werkzeugs, und, z.B. nach Anordnen eines kieferorthopädischen Drahts im Slot, ein einfaches Anordnen des Freiendes in die Schließstellung, z.B. indem das Freiende von einer Auflagefläche, auf der es in Öffnungsstellung aufliegt, wegbewegt wird, da sich das Freiende durch die Rückstellkraft des Clips selbst in die Geschlossenstellung bewegt.

Das Freiende des Clips ist generell zumindest in der Schließstellung nur durch seine Rückstellkraft gegen den Slot bzw. einen darin angeordneten kieferorthopädischen Draht belastet und insbesondere nicht mit dem Bracket verrastet.

Der Slot weist gegenüber seiner Öffnung eine Bodenfläche auf, die von zwei Seitenflächen begrenzt sind. Die Seitenflächen stehen bevorzugt senkrecht auf der Bodenfläche. Die Seitenflächen spannen zwischen sich gegenüber der Bodenfläche die Öffnung des Slots auf, durch die ein kieferorthopädischer Draht in den Slot eingeführt werden kann. Bevorzugt hat der kieferorthopädische Draht einen rechteckigen Querschnitt, von dem zwei gegenüberliegende Flächen passend oder mit Abstand gegen die Seitenflächen des Slots angeordnet sind. Optional ist zumindest die Seitenfläche des Slots, die näher an dem Freiende des Clips angeordnet wird, eine geringere Tiefe senkrecht zur Bodenfläche des Slots auf, als der Querschnitt des kieferorthopädischen Drahts beträgt, so dass der kieferorthopädische Draht zumindest mit seiner Oberfläche, bevorzugt seiner Kante, die näher an dem Freiende des Clips angeordnet ist, den Slot überragt. Optional können beide Seitenflächen des Slots eine geringere Tiefe zu seiner Bodenfläche aufweisen, als sich der Querschnitt des kieferorthopädischen Drahts entlang der Seitenflächen erstreckt, so dass der kieferorthopädische Draht über die Seitenflächen des Slots und über die Öffnung des Slots vorsteht. In diesen Ausführungsformen kann in Schließstellung der Bereich des Clips, der an das Freiende angrenzt, oder das Freiende, direkt auf dem kieferorthopädischen Draht aufliegen. Generell kann das Bracket eine Ausnehmung aufweisen, in der das Freiende des Clips in der Geschlossenstellung ohne Kontakt mit dem Bracket angeordnet ist.

Die Anordnung umfasst ein Bracket mit einem Pad und einem Bracketbody mit einem darin angeordneten Slot zur Aufnahme eines kieferorthopädischen Drahtes sowie einen dem Bracket zugeordneten Clip aus einem Formgedächtnismaterial zum Verschließen und Freigeben des Slots des Brackets, wobei der Clip eingerichtet ist, in Schließstellung einen kieferorthopädischen Draht in dem Slot zu halten bzw. ihn in Öffnungsstellung zur Entnahme aus dem Slot frei zu geben, wobei ein erstes Ende des Clips ein Fixierende ist, das fest mit dem Bracket verbunden ist, und ein dem ersten Ende gegenüberliegendes zweites Ende des Clips ein Freiende ist, das eingerichtet ist, in der Öffnungsstellung an dem Bracket den Slot frei gebend anzuliegen und in der Schließstellung den Slot zu übergreifen. Dabei ist der Clip nur durch elastisches Biegen zwischen der Öffnungsstellung und der Schließstellung beweglich und weist eine Federspannung bzw. Rückstellkraft auf, die sein Freiende in Schließstellung gegen die offene Seite des Querschnitts des Slots, bzw. gegen einen im Slot angeordneten kieferorthopädischen Draht belastet.

Dabei kann das Bracket eine Auflagefläche für das Freiende des Clips aufweisen, auf der das Freiende in der Öffnungsstellung aufliegt, z.B. mit seiner Stirnfläche, und optional eine weitere Auflagefläche, auf der das Freiende in Abwesenheit eines kieferorthopädischen Drahts in dem Slot in Schließstellung aufliegt.

Optional kann das Bracket für das Freiende des Clips in dessen Öffnungsstellung eine Auflagefläche aufweisen und das Bracket und der Clip können eingerichtet sein, dass in der Schließstellung das Freiende nur gegen den Querschnitt des Slots belastet ist, ohne das Bracket zu berühren, wobei insbesondere bei Anordnung eines kieferorthopädischen Drahts in dem Slot das Freiende in Schließstellung nur gegen den Draht belastet ist.

Vorteilhaft weist das Bracket mindestens einen Hook und/oder mindestens einen Wing auf.

Das Bracket besteht bevorzugt aus einer Kobalt-Chrom-Verbindung.

Mit Vorteil weist das Bracket eine Clipdurchführung auf, in der ein zwischen dem Fixierende und dem Freiende liegender Abschnitt des Clips gehalten ist.

Die Clipdurchführung weist bevorzugt eine Querschnittsform, insbesondere eine rechteckige Querschnittsform, auf, die der des Clips entspricht, jedoch in jeder Dimension um maximal 20% größer ist, bevorzugt maximal 10% größer ist und weiter bevorzugt maximal 5% größer ist.

Vorteilhaft ist die Clipdurchführung in dem Bracketbody gebildet.

Bevorzugt weist das Bracket für das Freiende des Clips in der Öffnungsstellung und in der Schließstellung jeweils eine Auflagefläche für das Freiende auf, insbesondere mit einer Kontur, die einer Kontur des Freiendes, insbesondere der Stirnfläche des Freiendes angepasst ist, um das Freiende stabil auf dieser anzuordnen.

Vorteilhaft sind die Auflageflächen als plane Auflageflächen gebildet. Optional ist die Stirnfläche des Freiendes parallel zum angrenzenden Querschnitt des Freiendes, bevorzugt mit schmalseitig abgerundeten Ecken.

Erfindungsgemäß besteht der Clip aus einem superelastischen Formgedächtnismaterial, insbes. einer NiTi-Verbindung, und ist insbesondere auf die Schließstellung programmiert.

Bevorzugt weist der Clip eine insbesondere kreisförmige Eingriffsöffnung auf, um ein mechanisches Eingreifen eines kieferorthopädischen Instruments zu ermöglichen, bspw. einer Sonde, um das Freiende zu Greifen und von der Schließstellung in die Öffnungsstellung zu bewegen.

Vorteilhaft ist der Clip in einer Abwicklung desselben ein Materialstreifen, der in einer Draufsicht und in beiden Seitenansichten im Wesentlichen eine Rechteckform aufweist, insbesondere die Materialdicke des Materialstreifens im Bereich von 0,05-0,5mm, vorzugsweise 0,2mm, liegt und eine Breite des Materialstreifens im Bereich von 1-6mm, vorzugsweise 2mm, liegt und eine Länge des Materialstreifens im Bereich von 1-10mm, vorzugsweise 6mm, liegt.

Bevorzugt ist das Fixierende des Clips mit dem Bracket mittels einer Schweißverbindung, insbesondere einer Laserschweißverbindung, oder mittels einer Klebeverbindung oder mittels insbesondere einer plastischen Verbreiterung über eine Klemmverbindung verbunden.

Mit Vorteil weist der Clip abschnittsweise eine Materialstärkenreduzierung, insbesondere im Bereich der Clipdurchführung, weiter insbesondere direkt im Anschluss an diese, auf, insbesondere eine Reduzierung um 30-70%, bevorzugt um 40-60% und weiter bevorzugt um 50%.

Bevorzugt weist die Materialstärkenreduzierung ein insbesondere zentrales und planares Tiefplateau auf, von dem aus in beide axialen Richtungen die Materialstärkenreduzierung jeweils entlang einer Rampe auf die Materialdicke ansteigt, wobei die Materialstärkenreduzierung in der Draufsicht auf den Bereich des ersten Schenkel des Clips insbesondere die Form eines Kreissegmentes oder eines Quadrats oder eines Rechtecks oder eines Kreises hat.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine perspektivische Draufsicht eines Materialstreifens zur Herstellung eines Clips,
- Fig. 2: eine perspektivische Schnittansicht des Materialstreifens der Figur 1,
- Fig. 3: einen Clip in einer perspektivischen Ansicht,
- Fig. 4: den Clip der Fig. 3 in einer weiteren perspektivischen Ansicht,
- Fig. 5: einen Bracketbody mit einem Distanzabschnitt (dieser ist bekannt aus DE 102011003894 A1) in einer Seitenansicht,
- Fig. 6: den Bracketbody der Fig. 5 in einer perspektivischen Ansicht,
- Fig. 7: den Bracketbody der Fig. 5 mit Clip in Schließstellung in einer Seitenansicht,
- Fig. 8: die Anordnung der Fig. 7 in einer perspektivischen Ansicht,
- Fig. 9: den Bracketbody der Fig. 5 mit Clip in Öffnungsstellung in einer Seitenansicht,
- Fig. 10: die Anordnung der Fig. 9 in einer perspektivischen Ansicht,
- Fig. 11: eine erfindungsgemäße Anordnung mit einem Bracket und einem Clip in einer Seitenansicht, und
- Fig. 12: die Anordnung der Fig. 11 in einer perspektivischen Ansicht.

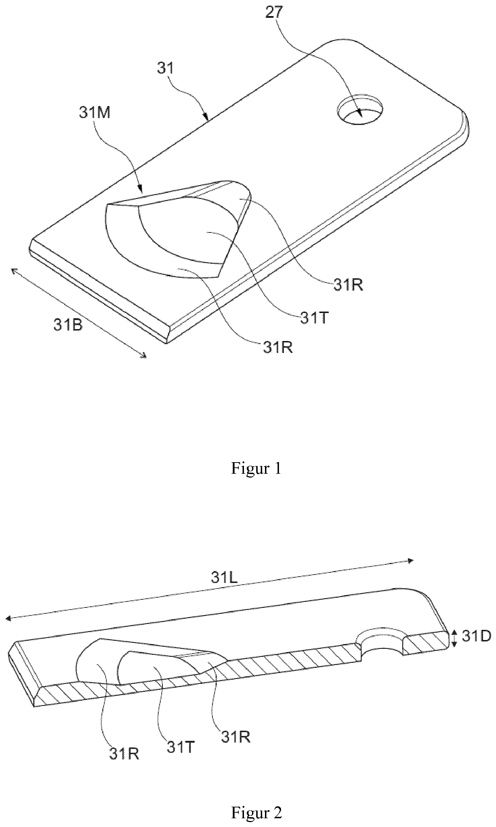

Figur 1 zeigt eine perspektivische Ansicht eines Materialstreifens 31 aus einer superelastischen NiTi-Verbindung. Der Materialstreifen weist eine Länge 31L von 6mm, eine Breite 31B von 2mm und eine Materialdicke 31D von 0,2mm auf.

Der Materialstreifen 31 weist in der Draufsicht und in den beiden Seitenansichten jeweils im Wesentlichen die Form eines Rechtecks auf, bis auf die an den Ecken gebildeten Abrundungen (in Fig. 1 an den beiden Ecken der oberen Schmalseite) bzw. die Fase (in Fig. 1 an der unteren Schmalseite des Materialstreifens 31).

In dem Materialstreifen 31 ist ferner, s. auch Figur 2, eine im Wesentlichen kreissegmentförmige Materialreduzierung 31M vorgesehen, vorliegend durch Tiefenerosion hergestellt: In einem zentralen und planen Tiefplateau 31T der Materialreduzierung 31M ist die Materialdicke 31D um 50% reduziert. Von dem Tiefplateau 31T ausgehend erstrecken sich in Längsrichtung des Materialstreifens 31 zu der einen und der gegenüberliegenden Schmalseite jeweils eine Rampe 31R. Die Rampen 31R weisen an ihren in Längsrichtung gegenüberliegenden Enden jeweils die Form eines Kreisabschnitts auf wie auch das Tiefplateau 31T. Die jeweils beiden anderen, gegenüberliegenden Seiten der Rampen 31R und des Tiefplateaus 31T sind gerade gebildet.

In dem Materialstreifen 31 ist eine kreisförmige Eingriffsöffnung 27 gebildet, um eine Eingriffsmöglichkeit für eine Sonde zu schaffen, wie weiter unten beschrieben.

Der Materialstreifen der Figuren 1 und 2 wird zur Verwendung mit einem Bracket in eine geeignete Form gebracht, bei der zwischen einem mittleren Abschnitt einem ersten Schenkel mit der Materialreduzierung ein Winkel von 90° gebildet und zwischen dem mittleren Abschnitt und einem zweiten Schenkel mit der Eingriffsöffnung 27 von 85° gebildet ist, wobei der zweite Schenkel kürzer als der erste Schenkel ist.

Der Materialstreifen 31 aus der superelastischen NiTi-Verbindung wird durch Erhitzen auf diese Form programmiert.

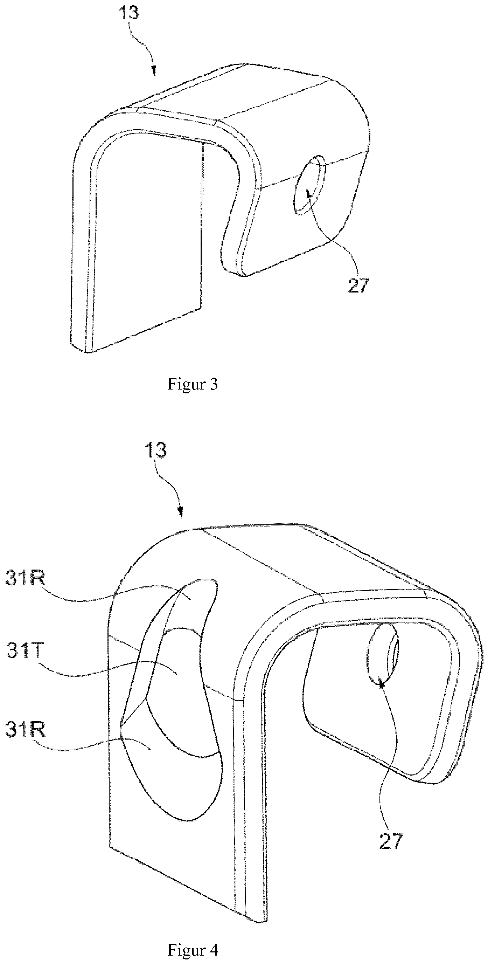

Die Figuren 3 und 4 zeigen perspektivische Ansichten des auf diese Weise aus dem Materialstreifens 31 gebildeten Clips 13.

Wie in Fig. 4 gezeigt, beginnt die Materialstärkenreduzierung 31M zwischen dem mittleren Abschnitt und dem ersten Schenkel.

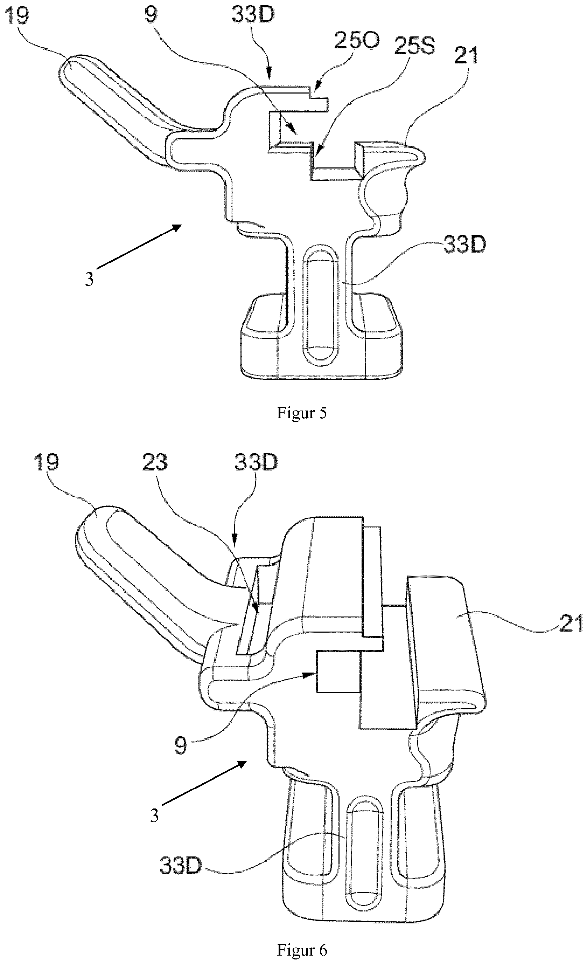

Die Figuren 5 und 6 zeigen eine Seiten- bzw. perspektivische Ansicht eines Rohbracketbody 33 mit einem Distanzabschnitt 33D, wie er in der DE102011003894A1 beschrieben ist. Von einem Bracketbody 7 erstrecken sich ein Hook 19 und ein Wing 21. Der Bracketbody 8 weist einen Slot 9 zur Aufnahme eines kieferorthopädischen Drahtes auf. An den Bracketbody 7 schließt sich der Distanzabschnitt 33D an, der patientenspezifisch durchtrennt wird, um ein patientenspezifisches Pad zu befestigen, wie in der DE102011003894A1 beschrieben.

Der Rohbracketbody 33 der Figuren 5 und 6 weist jedoch folgende Unterschiede zu dem aus der DE102011003894A1 bekannten Rohbracketbody auf: Zwischen dem Bracketbody 7 und dem Hook 19 ist eine Clipdurchführung 23 vorgesehen. Ferner sind zwei Auflageflächen 25 an dem Bracketbody 7 gebildet, um auf diesen ein Ende des Clips 13 anzuordnen, wie unten beschrieben.

Die Clipdurchführung 23 ist eine schlitzartige Öffnung in dem Bracketbody 7, deren Öffnungsquerschnitt von der Form her dem Querschnitt des Clips 13 entspricht, vorliegend eine Rechteckform. Die Clipdurchführung 23 ist jedoch von den Abmessungen her in jeder der beiden unabhängigen Dimensionen der Rechteckform etwas größer als der Clip 13, um diesen mit möglichst geringem Spiel aufzunehmen. Vorliegend weist die Clipdurchführung 23 z.B. eine Dicke von 0,3mm (der Clip 13 eine Dicke von 0,2mm) und eine Breite von 2,35mm (der Clip 13 eine Breite von 2mm) auf.

Die Auflageflächen 25 sind zwei Flächen, um das Freiende 17 in der Schließ- und der Öffnungsstellung stabil darauf anzuordnen. Die Kontur der Auflageflächen 25 ist dementsprechend an die Kontur der jeweils aufliegenden Flächen des Freiendes 17 angepasst: Da das Freiende 17 jeweils mit plan verlaufenden Fläche aufliegt, sind die beiden Auflageflächen 25 ebenfalls plan verlaufende Flächen. Wäre alternativ eine Fläche des Freiendes gekrümmt, so wäre die entsprechende Auflagefläche des Bracketbody kongruent dazu gekrümmt, um eine formschlüssige Aufnahme und somit stabile Auflage zu ermöglichen.

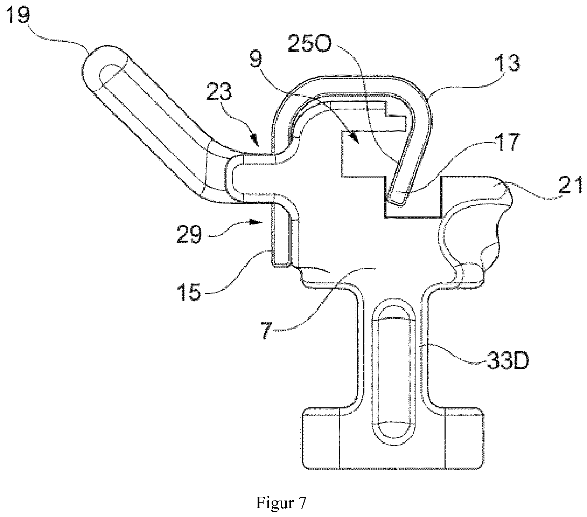

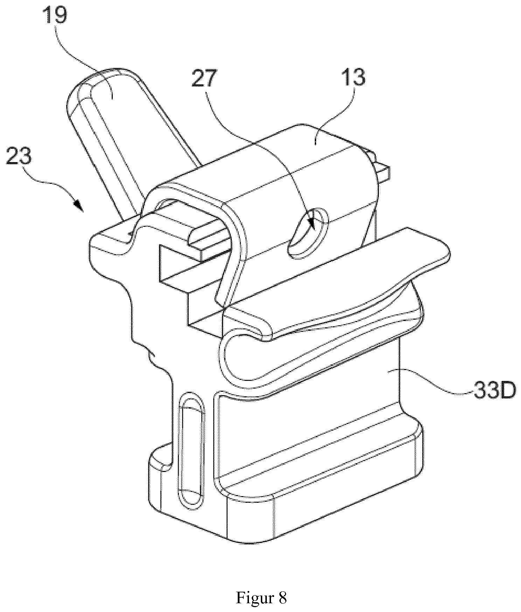

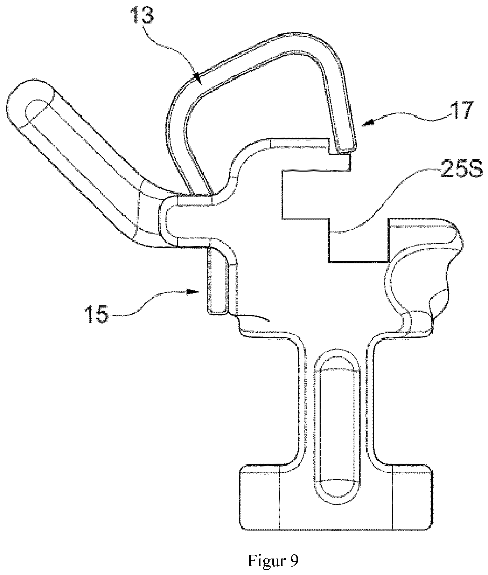

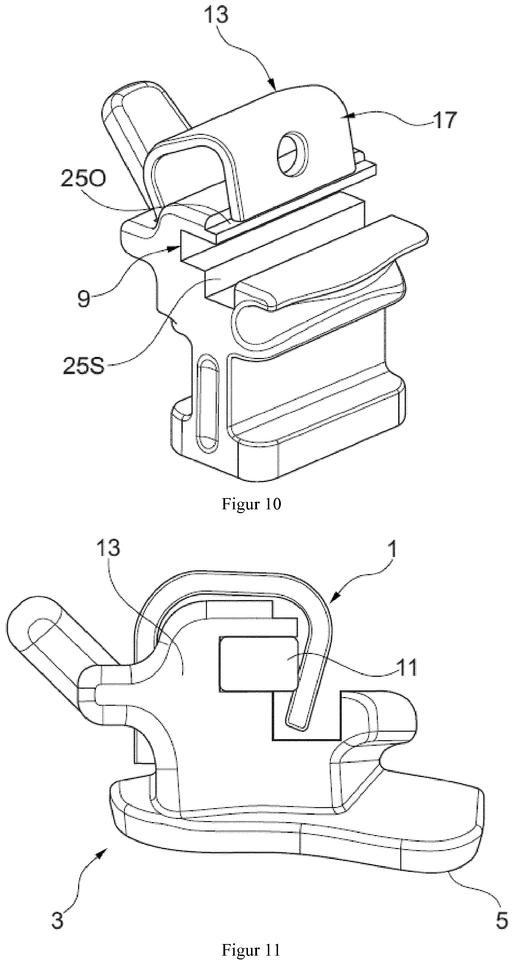

Zur Herstellung der erfindungsgemäßen Anordnung 1 wird der Clip 13 der Figuren 3 und 4 auf den Bracketbody 7 geschoben, bis die in den Figuren 7 und 8 gezeigte Position erreicht ist, wobei der erste Schenkel, d.h. der mit der Materialstärkenreduzierung 31M, durch die Clipdurchführung 23 geführt ist. Der Clip 13 ist, wie insbesondere in Fig. 7 gezeigt, bis zum Anschlag auf den Bracketbody 7 aufgeschoben, d.h. der mittlere Abschnitt des Clips 13 liegt an dem Bracketbody 7 an. Die Materialstärkenreduzierung 31M beginnt in Fig. 7 direkt nach der Clipdurchführung 23. Mit anderen Worten verläuft der Clip 13 durch die Clipdurchführung 23 bis zum freien Ende des ersten Schenkels des Clips 13 ohne die Materialstärkenreduzierung 31M. Die Materialstärkenreduzierung 31M beginnt in Fig. 7 direkt im Anschluss an die Clipdurchführung 23. In dieser Position wird der erste Schenkel des Clips 13 durch einen kurzen Laserimpuls lokal stark erhitzt, dehnt und verformt sich, ggfls. auch durch lokales Aufschmelzen, wodurch sich dieses Ende plastisch verformt und folgend mit dem Bracketbody 7 unter Bildung einer Klemmverbindung 29 fest verbunden ist, wodurch dieses Ende des Clips 13 ein Fixierende 15 bildet. Das diesem Ende gegenüberliegende Ende des Clips 13 bildet ein Freiende 17 und liegt - den Slot 9 übergreifend - auf einer Auflagefläche 25S für das Freiende auf. Die Auflagefläche 25S ist eine ebene Fläche, die unter einem Winkel von 90° zu einer Seitenwand des Slots 9 verläuft. Um den Clip 13 von der in den Figuren 7 und 8 gezeigten Schließstellung in eine Öffnungsstellung, die in den Figuren 9 und 10 gezeigt ist, zu bewegen, in der ein kieferorthopädischer Draht in den Slot 9 eingeführt oder aus diesem entnommen werden kann, wird wie folgt vorgegangen: Die Spitze einer Sonde wird in die Eingriffsöffnung 27 eingeführt und dann wird an der Sonde gezogen, bis das Freiende 17 auf einer Auflagefläche 25O aufliegt. Die Auflagefläche 25O ist eine zu einer Seitenwand des Slots 9 parallel verlaufende Fläche, wie insbesondere in Fig. 9 gezeigt. Da die Auflagefläche des Freiendes 17 parallel zu der Auflagefläche 25 verläuft, liegt das Freiende 17 in der Öffnungsstellung stabil auf der Auflagefläche 25 auf.

Beim Öffnen des Clips 13 wird der erste Schenkel des Clips 13 auf der Höhe der Materialstärkenreduzierung 31M um eine dem Hook 19 zugewandte Seitenkante der Clipdurchführung 23 gebogen, wie insbesondere in Fig. 9 gezeigt. Mit anderen Worten findet das Verbiegen des Clips 13 beim Öffnen fast ausschließlich in dem ersten Schenkel des Clips 13 statt, da dieser an der Seitenkante der Clipdurchführung 23 anliegt. Die Winkel zwischen dem mittleren Abschnitt des Clips 13 und dem ersten Schenkel sowie zwischen dem mittleren Abschnitt des Clips 13 und dem zweiten Schenkel bleiben somit im Wesentlichen unverändert.

Durch die Form und die Stärke der Materialstärkenreduzierung 31M kann die Kraft eingestellt werden, die notwendig ist, um den ersten Schenkel des Clips 13 an dieser Stelle der Materialstärkenrezduzierung 31M zu verbiegen. Deshalb ist die Materialstärkenreduzierung 31M in dem ersten Schenkel des Clips 13 angeordnet, wodurch an dieser Stelle der Clip 13 leichter verbogen bzw. gebogen werden kann. Diese Biegebewegung ist vorliegend dadurch unterstützt, dass die Materialstärkenreduzierung 31M vor der Clipdurchführung 23 angeordnet ist, so dass eine Kante der Clipdurchführung 23 eine Biegenkante für den ersten Schenkel des Clips 13 bei der Öffnungsbewegung bildet. Ist die Materialstärkenreduzierung 31 großflächig und von großer Reduzierung (bspw. 80%), so lässt sich der erste Schenkel leicht verbiegen. Ist hingegen die Materialstärkenreduzierung von kleiner Fläche und von geringer Reduzierung (bspw. 10%), so lässt sich der erste Schenkel schwerer biegen.

Um das Freiende 17 des Clips 13 wieder in die Schließstellung zu überführen, kann wieder eine Sonde in Eingriff mit der Eingriffsöffnung 27 gebracht werden. Alternativ kann der Clip 13 von Hand, bspw. mit einem Finger, oder mit einem Ligaturenverstecke im Einsatz im Mund eines Patienten in die Schließstellung gedrückt werden. Da der Clip 13 auf die in den Figuren 7 und 8 gezeigte Schließstellung programmiert ist, erwärmt er sich im Mund eines Patienten und nimmt von selbst die programmierte Schließstellung ein, bei der das Freiende 17 stabil auf der Auflagefläche 25S oder, wie in Fig. 11 gezeigt, auf dem kieferorthopädischen Draht 11 aufliegt.

Wie in der DE102011003894A1 beschrieben, wird bevorzugt zur Herstellung eines Brackets 3 folgend der Distanzabschnitt 33D patientenspezifisch durchtrennt und ein Pad 5 an dem Bracketbody 7 befestigt, bevorzugt mittels Laserschweißen. Durch diesen Schritt ist aus dem Rohbracketbody 33 ein Bracket 3 entstanden.

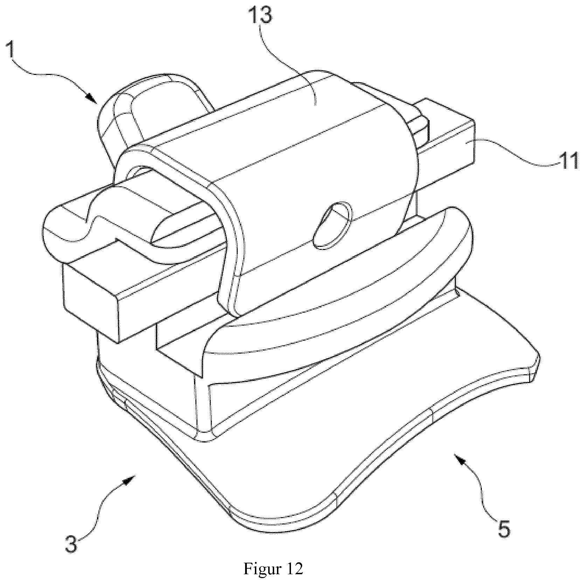

Die Figuren 11 und 12 zeigen die erfindungsgemäße Anordnung 1 aus einem Bracket 3, mit dem das Fixierende 15 des Clips 13 fest verbunden ist. Das Freiende 17 des Clips 13 hält einen kieferorthopädischen Draht 11 in dem Slot 9 des Brackets 3.

Ist das Bracket 3 auf einen Zahn eines Patienten geklebt, so kann sich Zahnstein auf dem Bracket 3 und dem Clip 13 ablagern. Durch zum einen die spezielle Form des Clips 13, der bis auf den zweiten Schenkel, der den Slot 9 übergreift, vollflächig an dem Bracket 3 anliegt, kann sich nur wenig Zahnstein zwischen Clip 13 und Bracket 3 anlagern und zum anderen die starke Biegung des Clips 13 an der Clipdurchführung 23 beim Öffnen und Schließen des Clips 13, durch die abgelagerter Zahnstein auf Grund der entstehenden Scherungen abgesprengt wird, ergeben sich mit der erfindungsgemäßen Anordnung 1 deutlich weniger Probleme mit Zahnstein beim Öffnen und Schließen des Clips 13.

Das Freiende 17 kann somit in der Öffnungs- bzw. der Schließstellung jeweils auf einer Auflagefläche 25O, 25S stabil angeordnet werden, so dass das Fixierende 15 des Clips 13 auf der dem Freiende 17 gegenüberliegenden Seite des Bracketbody 7 vorzusehen und zu fixieren ist.

Der Wing 21 an dem Bracket ist vorgesehen, um den kieferorthopädischen Draht 11 mittels einer herkömmlichen Ligatur an dem Bracket 3 zu halten, wenn der Clip 13 nicht zur Verfügung ist, bspw. wenn er kaputt und oder nicht vorrätig ist.

Das Bracket 3 kann ein Lingual- oder ein Bukkalbracket sein.

Die Materialstärkenreduzierung 31M kann auf beiden Seiten des Clips 13 angeordnet sein, d.h. auf der Außenseite des Clips 13, wie in Fig. 4 gezeigt, oder auf der gegenüberliegenden Seite, d.h. auf der Innenseite des Clips 13 der Fig. 4.

Mit Vorteil wird der erste Schenkel des Clips 13 mit dem Bracketbody 7 mittels einer plastischen Verbreiterung klemmend fest verbunden. In der o.g. Ausführungsform erfolgt dies über einen kurzen Laserimpuls, der zu einer plastischen Verbreiterung (einem Aufpilzen) des ersten Schenkels und somit zu einer Klemmverbindung 29 mit dem Bracketbody 7 führt. Andere Varianten für eine plastische Verbreiterung sind denkbar: Der erste Schenkel des Clips 13 könnte auch mechanisch verbreitert werden, um eine Klemmverbindung zu erzielen, bspw. durch starkes Drücken oder leichte Schläge auf den ersten Schenkel des Clips 13, bspw. mit einer starren Sonde, einem kleinen Schraubendreher und einem Hammer, etc.

### Bezugszeichenliste

- 1: Anordnung
- 3: Bracket
- 5: Pad
- 7: Bracketbody
- 9: Slot
- 11: kieferorthopädischer Draht
- 13: Clip
- 15: Fixierende
- 17: Freiende
- 19: Hook
- 21: Wing
- 23: Clipdurchführung
- 25O: Auflagefläche für das Freiende in Öffnungsstellung
- 25S: Auflagefläche für das Freiende in Schließstellung
- 27: kreisförmige Eingriffsöffnung
- 29: Klemmverbindung
- 31: Materialstreifen
- 31B: Breite des Materialstreifens
- 31D: Materialdicke
- 31L: Länge des Materialstreifens
- 31M: Materialstärkenreduzierung
- 31T: Tiefplateau
- 31R: Rampe
- 33: Rohbracketbody
- 33D: Distanzabschnitt des Rohbracketbody

## Patentansprüche

1. Anordnung (1) umfassend ein Bracket (3) mit einem Pad (5) und einem Bracketbody (7) mit einem Slot (9) zur Aufnahme eines kieferorthopädischen Drahtes (11) sowie einen dem Bracket (3) zugeordneten Clip (13) aus einem Formgedächtnismaterial zum Verschließen und Freigeben des Slots (9) des Brackets (3), um den kieferorthopädischen Draht (11) in einer Schließstellung in dem Slot (9) zu halten bzw. ihn in einer Öffnungsstellung zur Entnahme aus dem Slot (9) frei zu geben, **dadurch gekennzeichnet, dass** ein erstes Ende des Clips (13) ein Fixierende (15) ist, das fest mit dem Bracket (3) verbunden ist, und ein zweites Ende des Clips (13) ein Freiende (17) ist, das in der Öffnungsstellung an dem Bracket (3) den Slot (9) frei gebend anliegt und in der Schließstellung an dem Bracket (3) den Slot (9) übergreifend anliegt.

2. Anordnung nach Anspruch 1, **dadurch gekennzeichnet, dass** das Bracket (3) mindestens einen Hook (19) und / oder mindestens einen Wing (21) aufweist.

3. Anordnung nach Anspruch 1 oder 2, **dadurch gekennzeichnet, dass** das Bracket (3) aus einer Kobalt-Chrom-Verbindung besteht.

4. Anordnung nach einem der vorangehenden Ansprüche, **dadurch gekennzeichnet, dass** das Bracket (3) eine Clipdurchführung (23) aufweist, in der ein zwischen dem Fixierende (15) und dem Freiende (17) liegender Abschnitt des Clips (13) gehalten ist.

5. Anordnung nach Anspruch 4, **dadurch gekennzeichnet, dass** die Clipdurchführung (23) eine Querschnittsform, insbesondere eine rechteckige Querschnittsform, aufweist, die der des Clips (13) entspricht, jedoch in jeder Dimension um maximal 20% größer ist, bevorzugt maximal 10% größer ist und weiter bevorzugt maximal 5% größer ist.

6. Anordnung nach Anspruch 4 oder 5, **dadurch gekennzeichnet, dass** die Clipdurchführung (23) in dem Bracketbody (7) gebildet ist.

7. Anordnung nach einem der vorangehenden Ansprüche, **dadurch gekennzeichnet, dass** das Bracket (3) für das Freiende (17) des Clips (13) in der Öffnungsstellung und in der Schließstellung jeweils eine Auflagefläche (25O, 25S) für das Freiende (17) aufweist, insbesondere mit einer Kontur, die einer Kontur des Freiendes (17) angepasst ist, um das Freiende stabil auf dieser anzuordnen.

8. Anordnung nach Anspruch 7, **dadurch gekennzeichnet, dass** die Auflageflächen (25O, 25S) als plane Auflageflächen gebildet sind.

9. Anordnung nach einem der vorangehenden Ansprüche, **dadurch gekennzeichnet, dass** das Bracket (3) für das Freiende (17) des Clips (13) in dessen Öffnungsstellung eine Auflagefläche (25O) aufweist und in der Schließstellung das Freiende (17) nur gegen den Querschnitt des Slots (9) belastet ist, ohne das Bracket (3) zu berühren.

10. Anordnung nach einem der vorangehenden Ansprüche, **dadurch gekennzeichnet, dass** der Clip (13) aus einem superelastischen Formgedächtnismaterial besteht, insbes. einer NiTi-Verbindung, und auf die Schließstellung programmiert ist.

11. Anordnung nach einem der vorangehenden Ansprüche, **dadurch gekennzeichnet, dass** der Clip (13) eine insbesondere kreisförmige Eingriffsöffnung (27) aufweist, um ein mechanisches Eingreifen eines kieferorthopädischen Instruments zu ermöglichen, bspw. einer Sonde, um das Freiende (17) zu greifen und von der Schließstellung in die Öffnungsstellung zu bewegen.

12. Anordnung nach einem der vorangehenden Ansprüche, **dadurch gekennzeichnet, dass** der Clip (13) in einer Abwicklung desselben ein Materialstreifen (31) ist, der in einer Draufsicht und in beiden Seitenansichten im Wesentlichen eine Rechteckform aufweist, insbesondere die Materialdicke (31D) des Materialstreifens im Bereich von 0,05-0,5mm, vorzugsweise 0,2mm, liegt und eine Breite (31B) des Materialstreifens im Bereich von 1-6mm, vorzugsweise 2mm, liegt und eine Länge (31L) des Materialstreifens im Bereich von 1-10mm, vorzugsweise 6mm, liegt.

13. Anordnung nach einem der vorangehenden Ansprüche, **dadurch gekennzeichnet, dass** ein kieferorthopädischer Draht (11) in dem Slot (9) angeordnet ist.

14. Anordnung nach einem der vorangehenden Ansprüche, **dadurch gekennzeichnet, dass** das Fixierende (15) des Clips mit dem Bracket mittels einer Schweißverbindung, insbesondere einer Laserschweißverbindung, oder mittels einer Klebeverbindung oder mittels einer insbes. mechanischen Verbreiterung über eine Klemmverbindung (29) verbunden ist.

15. Anordnung nach einem der vorangehenden Ansprüche, **dadurch gekennzeichnet, dass** der Clip (13) abschnittsweise eine Materialstärkenreduzierung (31M), insbesondere im Bereich der Clipdurchführung (23), weiter insbesondere direkt im Anschluss an diese, aufweist, insbesondere eine Reduzierung um 30-70%, bevorzugt um 40-60% und weiter bevorzugt um 50%.

16. Anordnung nach Anspruch 15, **dadurch gekennzeichnet, dass** die Materialstärkenreduzierung (31M) ein insbesondere zentrales und planares Tiefplateau (31T) aufweist, von dem aus in beide axialen Richtungen die Materialstärkenreduzierung (31M) jeweils entlang einer Rampe (31R) auf die Materialdicke (31D) ansteigt, wobei die Materialstärkenreduzierung in der Draufsicht auf den Bereich des ersten Schenkel des Clips insbesondere die Form eines Kreissegmentes oder eines Quadrats oder eines Rechtecks oder eines Kreises hat.

17. Anordnung nach einem der vorangehenden Ansprüche, **dadurch gekennzeichnet, dass** der Slot (9) Seitenwände aufweist, die zwischen sich eine Bodenfläche des Slots (9) begrenzen und gegenüber eine Öffnung des Slots (9) aufspannen, wobei sich zumindest die Seitenwand, die in Geschlossenstellung näher am Freiende (17) anzuordnen ist, sich in geringerem Ausmaß über die Bodenfläche erstreckt, als der Querschnitt des in dem Slot (9) anzuordnenden kieferorthopädischen Drahts.

## Geänderte Patentansprüche

### Geänderte Patentansprüche gemäss Regel 137(2) EPÜ.

1. Anordnung (1) umfassend ein Bracket (3) mit einem Pad (5) und einem Bracketbody (7) mit einem Slot (9) zur Aufnahme eines kieferorthopädischen Drahtes (11) sowie einen dem Bracket (3) zugeordneten Clip (13) aus einem Formgedächtnismaterial zum Verschließen und Freigeben des Slots (9) des Brackets (3), um den kieferorthopädischen Draht (11) in einer Schließstellung in dem Slot (9) zu halten bzw. ihn in einer Öffnungsstellung zur Entnahme aus dem Slot (9) frei zu geben, und ein erstes Ende des Clips (13) ein Fixierende (15) ist, das fest mit dem Bracket (3) verbunden ist, und ein zweites Ende des Clips (13) ein Freiende (17) ist, das in der Öffnungsstellung an dem Bracket (3) den Slot (9) frei gebend anliegt und in der Schließstellung an dem Bracket (3) den Slot (9) übergreifend anliegt **dadurch gekennzeichnet, dass** der Clip (13) aus einem superelastischen NiTi-Formgedächtnismaterial besteht und auf die Schließstellung programmiert ist.

2. Anordnung nach Anspruch 1, **dadurch gekennzeichnet, dass** das Bracket (3) mindestens einen Hook (19) und / oder mindestens einen Wing (21) aufweist.

3. Anordnung nach Anspruch 1 oder 2, **dadurch gekennzeichnet, dass** das Bracket (3) aus einer Kobalt-Chrom-Verbindung besteht.

4. Anordnung nach einem der vorangehenden Ansprüche, **dadurch gekennzeichnet, dass** das Bracket (3) eine Clipdurchführung (23) aufweist, in der ein zwischen dem Fixierende (15) und dem Freiende (17) liegender Abschnitt des Clips (13) gehalten ist.

5. Anordnung nach Anspruch 4, **dadurch gekennzeichnet, dass** die Clipdurchführung (23) eine Querschnittsform, insbesondere eine rechteckige Querschnittsform, aufweist, die der des Clips (13) entspricht, jedoch in jeder Dimension um maximal 20% größer ist, bevorzugt maximal 10% größer ist und weiter bevorzugt maximal 5% größer ist.

6. Anordnung nach Anspruch 4 oder 5, **dadurch gekennzeichnet, dass** die Clipdurchführung (23) in dem Bracketbody (7) gebildet ist.

7. Anordnung nach einem der vorangehenden Ansprüche, **dadurch gekennzeichnet, dass** das Bracket (3) für das Freiende (17) des Clips (13) in der Öffnungsstellung und in der Schließstellung jeweils eine Auflagefläche (25O, 25S) für das Freiende (17) aufweist, insbesondere mit einer Kontur, die einer Kontur des Freiendes (17) angepasst ist, um das Freiende stabil auf dieser anzuordnen.

8. Anordnung nach Anspruch 7, **dadurch gekennzeichnet, dass** die Auflageflächen (25O, 25S) als plane Auflageflächen gebildet sind.

9. Anordnung nach einem der vorangehenden Ansprüche, **dadurch gekennzeichnet, dass** das Bracket (3) für das Freiende (17) des Clips (13) in dessen Öffnungsstellung eine Auflagefläche (25O) aufweist und in der Schließstellung das Freiende (17) nur gegen den Querschnitt des Slots (9) belastet ist, ohne das Bracket (3) zu berühren.

10. Anordnung nach einem der vorangehenden Ansprüche, **dadurch gekennzeichnet, dass** der Clip (13) eine insbesondere kreisförmige Eingriffsöffnung (27) aufweist, um ein mechanisches Eingreifen eines kieferorthopädischen Instruments zu ermöglichen, bspw. einer Sonde, um das Freiende (17) zu greifen und von der Schließstellung in die Öffnungsstellung zu bewegen.

11. Anordnung nach einem der vorangehenden Ansprüche, **dadurch gekennzeichnet, dass** der Clip (13) in einer Abwicklung desselben ein Materialstreifen (31) ist, der in einer Draufsicht und in beiden Seitenansichten im Wesentlichen eine Rechteckform aufweist, insbesondere die Materialdicke (31D) des Materialstreifens im Bereich von 0,05-0,5mm, vorzugsweise 0,2mm, liegt und eine Breite (31B) des Materialstreifens im Bereich von 1-6mm, vorzugsweise 2mm, liegt und eine Länge (31L) des Materialstreifens im Bereich von 1-10mm, vorzugsweise 6mm, liegt.

12. Anordnung nach einem der vorangehenden Ansprüche, **dadurch gekennzeichnet, dass** ein kieferorthopädischer Draht (11) in dem Slot (9) angeordnet ist.

13. Anordnung nach einem der vorangehenden Ansprüche, **dadurch gekennzeichnet, dass** das Fixierende (15) des Clips mit dem Bracket mittels einer Schweißverbindung, insbesondere einer Laserschweißverbindung, oder mittels einer Klebeverbindung oder mittels einer insbes. mechanischen Verbreiterung über eine Klemmverbindung (29) verbunden ist.

14. Anordnung nach einem der vorangehenden Ansprüche, **dadurch gekennzeichnet, dass** der Clip (13) abschnittsweise eine Materialstärkenreduzierung (31M), insbesondere im Bereich der Clipdurchführung (23), weiter insbesondere direkt im Anschluss an diese, aufweist, insbesondere eine Reduzierung um 30-70%, bevorzugt um 40-60% und weiter bevorzugt um 50%.

15. Anordnung nach Anspruch 14, **dadurch gekennzeichnet, dass** die Materialstärkenreduzierung (31M) ein insbesondere zentrales und planares Tiefplateau (31T) aufweist, von dem aus in beide axialen Richtungen die Materialstärkenreduzierung (31M) jeweils entlang einer Rampe (31R) auf die Materialdicke (31D) ansteigt, wobei die Materialstärkenreduzierung in der Draufsicht auf den Bereich des ersten Schenkel des Clips insbesondere die Form eines Kreissegmentes oder eines Quadrats oder eines Rechtecks oder eines Kreises hat.

16. Anordnung nach einem der vorangehenden Ansprüche, **dadurch gekennzeichnet, dass** der Slot (9) Seitenwände aufweist, die zwischen sich eine Bodenfläche des Slots (9) begrenzen und gegenüber eine Öffnung des Slots (9) aufspannen, wobei sich zumindest die Seitenwand, die in Geschlossenstellung näher am Freiende (17) anzuordnen ist, sich in geringerem Ausmaß über die Bodenfläche erstreckt, als der Querschnitt des in dem Slot (9) anzuordnenden kieferorthopädischen Drahts.
